Europäisches Patentamt

European Patent Office

Office européen des brevets

(19)

(11) Numéro de publication : **0 445 031 A1**

(12) # DEMANDE DE BREVET EUROPEEN

(21) Numéro de dépôt : 91400534.3

(22) Date de dépôt : 27.02.91

(51) Int. Cl.⁵ : **G07C 5/12, G01P 1/12**

(30) Priorité : 28.02.90 FR 9002506

(43) Date de publication de la demande :
04.09.91 Bulletin 91/36

(84) Etats contractants désignés :
DE ES GB IT

(71) Demandeur : JAEGER
2, rue Baudin
F-92303 Levallois-Perret (FR)

(72) Inventeur : **Guillou, Jean-Pierre**
**165 rue St Denis**
**F-92700 Colombes (FR)**
Inventeur : **Clayssen, Michel**
**1 Place du Parc aux Lièvres**
**F-91000 Evry (FR)**

(74) Mandataire : **Warcoin, Jacques et al**
**Cabinet Régimbeau 26, avenue Kléber**
**F-75116 Paris (FR)**

(54) **Dispositif inscripteur pour enregistreurs de route de véhicule, pouvant entrer en action automatiquement dès que le véhicule est en marche et aussi lorsque le véhicule est à l'arrêt.**

(57)   L'invention concerne un dispositif d'inscription (100) comportant d'une part des moyens inscripteurs (101) associés à la chaîne odométrique et actionnés par le moteur électrique (105) du totalisateur de distance (106) et d'autre part des moyens inscripteurs (102) correspondant à différents modes d'utilisation du véhicule à l'arrêt.

Conformément à l'invention, le moteur (105) de la chaîne odométrique est à deux sens de rotation, avec un sens direct lorsque le véhicule est en marche, dans lequel le moteur (105) actionne l'ensemble des moyens inscripteurs (101, 102), et avec un sens inverse associé à une période d'arrêt du véhicule, dans lequel ledit moteur entraîne seulement les moyens inscripteurs (102) ; le totalisateur (106) est relié au moteur (105) par une liaison d'accouplement débrayable (110) tel que l'entraînement du totalisateur (106) est seulement réalisé lorsque le moteur (105) tourne dans le sens direct.

Application aux enregistreurs de route de véhicule avec un ou deux disques porte-diagramme.

EP 0 445 031 A1

## DISPOSITIF INSCRITEUR POUR ENREGISTREURS DE ROUTE DE VEHICULE, POUVANT ENTRER EN ACTION AUTOMATIQUEMENT DES QUE LE VEHICULE EST EN MARCHE ET AUSSI LORSQUE LE VEHICULE EST A L'ARRET

L'invention concerne un dispositif d'inscription pour enregistreurs de route, dénommés en général tachygraphes, et en particulier un dispositif pouvant entrer en action dès que le véhicule est en marche et aussi lorsque le véhicule est à l'arrêt.

L'état de la technique est illustré par les demandes de brevet européen N° 0 126 374 et N° 0 012 223, les brevets français N° 2 325 024, N° 2 287 686, N° 2 264 332, N° 2 203 549, N° 2188 880, N° 2 014 574, le brevet allemand N° 23 53 988, le brevet belge N° 772 432, les brevets suisses N° 501 925 et N° 490 664, le brevet anglais N° 2 067 291, et le brevet américain N° 3 683 399.

Il est connu d'utiliser des enregistreurs de route pour inscrire des données intervenant au cours de l'utilisation d'un véhicule, telles que le trajet parcouru, la vitesse effectuée, le temps de route. Ces données concernent une utilisation en conduite, à un ou deux chauffeurs, et sont reportées par des moyens inscripteurs qui permettent d'obtenir un tracé d'enregistrement sur un disque porte-diagramme (ou deux disques en variante bi-chauffeurs) entraîné conformément au temps réel par un organe tel qu'une montre.

Pour un enregistrement de données lorsque le véhicule est à l'arrêt, les moyens mis en oeuvre, quand ils sont prévus, ne sont pas toujours satisfaisants.

On a ainsi proposé, pour caractériser les temps de travail de chaque conducteur, en plus du pendule à secousses à l'aide duquel on ne peut enregistrer que les temps de roulage, et qui fait fonction d'organe de contrôle pour le cas où l'entraînement de l'enregistreur de route s'est trouvé interrompu ou a été interrompu volontairement, des dispositifs inscripteurs supplémentaires qui entrent en action aussi bien pendant la marche du véhicule que pour l'enregistrement de travaux auxiliaires, tels que chargement et déchargement, réparations sur le véhicule, temps d'attente ou de repos, alors que le véhicule est à l'arrêt. Ces dispositifs inscripteurs de temps de travail, pour autant qu'ils inscrivent également des diagrammes à trait épaissi, sont le plus souvent entraînés par un générateur électrique d'oscillations, et sont en général montés sur des axes disposés à l'intérieur du boîtier de l'enregistreur de route ou sur une platine de montage pouvant être mise en place à l'intérieur de l'enregistreur de route.

Il est donc en général prévu un moteur spécial pour commander les moyens inscripteurs lorsque le véhicule est à l'arrêt, de façon à avoir un trait épaissi sur le disque porte-diagramme. L'emploi d'un tel moteur spécial présente de nombreux inconvénients : d'abord sa présence occasionne une consommation électrique non négligeable pour la batterie du véhicule, ensuite le coût est important, enfin et surtout la fiabilité est insuffisante en cas de panne. En effet, la détection par le chauffeur d'un mauvais fonctionnement de ce moteur spécial n'est pas toujours aisée, de sorte qu'il est nécessaire de prévoir des moyens supplémentaires de contrôle pour la surveillance du bon fonctionnement dudit moteur, ce qui accroît encore la consommation électrique et le coût de fabrication de l'ensemble.

La demanderesse a proposé un dispositif d'inscription pouvant entrer en action aussi bien pendant la marche du véhicule qu'à l'arrêt de celui-ci, dans lequel les moyens de commande agissant sur les moyens inscripteurs étaient en prise directe avec le moteur d'entraînement de la montre. Un tel dispositif est décrit dans la demande de brevet français N° 2 574 198.

En variante, la demanderesse a également proposé un dispositif d'inscription pouvant entrer en action automatiquement dès que le véhicule est en marche, dans lequel une came supplémentaire est prévue, pouvant se substituer à la came de guidage habituelle à plusieurs positions dès que le véhicule est en marche, et ce dans n'importe laquelle desdites positions, cette substitution étant réalisée par des moyens d'actionnement commandés par la chaîne vitesse du véhicule, les moyens inscripteurs produisant alors un tracé correspondant à une position de conduite. Un tel dispositif est décrit dans la demande de brevet français N° 2 574 199.

Ces solutions sont intéressantes, car elles permettent d'éviter l'utilisation du moteur spécial précité, et elles permettent de pallier l'oubli d'un conducteur de mettre le sélecteur manuel de l'enregistreur en position de conduite.

Cependant, la valeur élevée du couple nécessaire pour entraîner le ou les disques porte-diagramme implique alors de prévoir un moteur de puissance relativement importante, ce qui induit une consommation sur parc non négligeable, affaiblissant notablement les batteries du véhicule.

A ceci s'ajoute un niveau de sécurité qui n'est pas totalement satisfaisant, en raison de la dépendance directe à la sécurité de fonctionnement de la montre.

Il apparaît donc intéressant de chercher à concevoir un dispositif d'inscription qui rassemblerait les avantages des dispositifs décrits dans les deux demandes de brevet français précitées, mais qui prélèverait la puissance autrement que sur le moteur d'entraînement de la montre, de façon que la réserve de puissance procure un niveau de sécurité optimal. Un tel dispositif offrirait en outre l'avantage supplémentaire de n'utiliser qu'un moteur de faible puissance pour l'entraînement de la montre, ce qui diminuerait d'autant la consommation sur parc.

L'invention a pour but de réaliser un tel dispositif, dont la structure reste simple et compacte, et le niveau de fiabilité élevé.

Un autre but de l'invention est de réaliser un dispositif présentant une souplesse élevée de fonctionnement quels que soient le mode de conduite du chauffeur et/ou les modes d'utilisation du véhicule à l'arrêt, et qui soit aisément adaptable pour une application bi-chauffeurs, notamment en pouvant s'intégrer à un enregistreur à deux disques porte-diagramme tel que décrit dans la demande de brevet européen N° 0 328 454 de la demanderesse.

L'invention a aussi pour but de proposer un dispositif permettant d'obtenir un enregistrement du "temps-chauffeur" dont la lecture est aisée.

Il s'agit plus particulièrement d'un dispositif d'inscription pour enregistreurs de route de véhicule, pouvant entrer en action automatiquement dès que le véhicule est en marche et aussi lorsque ledit véhicule est à l'arrêt, comportant des premiers et des seconds moyens inscripteurs pour l'obtention de tracés d'enregistrement correspondants sur un disque porte-diagramme, lesdits premiers moyens inscripteurs, associés à la chaîne mécanique odométrique, étant actionnés par des moyens d'entraînement associés en prise avec le moteur électrique du totalisateur de distance, et lesdits seconds moyens inscripteurs, correspondant à différents modes d'utilisation du véhicule à l'arrêt, étant actionnés par des moyens d'entraînement associés tout en tenant compte de la position d'un sélecteur manuel correspondant au mode d'utilisation concerné, caractérisé par le fait que le moteur de la chaîne odométrique est à deux sens de rotation, avec un sens direct associé à une période pendant laquelle le véhicule est en marche et dans lequel ledit moteur actionne simultanément les premiers et seconds moyens inscripteurs, et un sens inverse associé à une période pendant laquelle le véhicule est à l'arrêt, dans lequel ledit moteur entraîne seulement les seconds moyens inscripteurs, le totalisateur étant relié au moteur de la chaîne odométrique par une liaison d'accouplement débrayable permettant d'entraîner ledit totalisateur et d'actionner lesdits premiers moyens enregistreurs seulement lorsque ledit moteur tourne dans le sens direct.

Selon un mode de réalisation préféré, les moyens d'entraînement des seconds moyens enregistreurs comportent deux cames coaxiales superposées, dont une première came qui est en permanence en prise avec le moteur, et une deuxième came qui est entraînée par friction par ladite première came, jusqu'à une position de butée prédéterminée, de façon à définir, par la portion concernée de son contour lors de la position de butée concernée, l'amplitude du tracé d'enregistrement.

De préférence alors, le dispositif d'inscription comporte une butée fixe pour arrêter la deuxième came lorsque le moteur tourne dans le sens direct, et une butée mobile couplée au sélecteur manuel, pour arrêter ladite deuxième came lorsque le moteur tourne dans le sens inverse, l'axe des deux cames étant parallèle à l'axe dudit sélecteur manuel. En particulier, la butée est portée par une pièce de butée montée sur la tringle du sélecteur manuel, ladite pièce de butée étant affectée d'un indexeur marquant chacune des positions dudit sélecteur manuel pouvant être sélectionnées ; il est également intéressant que la pièce de butée présente en outre deux taquets saillant radialement limitant son débattement angulaire par coopération avec une seconde butée fixe. Avantageusement aussi, l'indexeur est essentiellement constitué par une roue crantée montée sur la tringle du sélecteur manuel, et par une lame-ressort bloquée en rotation et coopérant avec l'un des crans de ladite roue crantée.

De préférence, la première came fait partie d'une pièce unique, dont une portion est un pignon coaxial permettant son entraînement en rotation par le moteur. Avantageusement aussi, la deuxième came est une pièce plate à profil étagé, présentant une patte radiale saillante pouvant coopérer soit avec la butée fixe soit avec la butée mobile, selon, le sens de rotation du moteur ; en particulier, le profil étagé de la deuxième came comporte successivement quatre secteurs circulaires de rayons croissant progressivement, le secteur de plus faible rayon intervenant lorsque le moteur de la chaîne odométrique tourne dans le sens direct, pour un tracé d'enregistrement d'amplitude maximale, et les autres secteurs intervenant lorsque ledit moteur tourne dans le sens inverse pour des tracés d'amplitudes plus faibles correspondantes.

De préférence, la liaison d'accouplement débrayable associée à l'entraînement du totalisateur et à l'actionnement des premiers moyens enregistreurs est réalisée sous la forme d'une liaison dentée à cliquet, réalisant un entraînement positif dans un sens et un glissement dans l'autre sens.

Avantageusement aussi, le moteur électrique de la chaîne odométrique est un moteur pas-à-pas. De préférence alors, une temporisation est associée au moteur électrique, de façon à retarder pendant un laps de temps prédéterminé l'inversion dudit moteur en cas d'arrêt du véhicule sans coupure de son moteur, avec éventuellement une temporisation supplémentaire intervenant en cas d'arrêt du véhicule et de coupure de son moteur, afin de retarder l'arrêt dudit moteur électrique, et de garantir ainsi que la deuxième came est effectivement au contact de la butée mobile associée ; de préférence, cette temporisation supplémentaire est courte, par exemple de l'ordre de quelques minutes, pour une position du sélecteur manuel correspondant à une période de repos, et nettement plus longue, par exemple de l'ordre de 24 à 48 heures, pour les autres positions dudit sélecteur manuel correspondant à une période de chargement/déchargement ou à une période de réparation.

Il est par ailleurs avantageux, pour le cas d'un dispositif d'inscription dans lequel les seconds moyens inscripteurs sont dédoublés de façon connue en soi pour un enregistrement sur deux disques porte-diagramme superposés de manière isoaxiale, de façon à pouvoir distinguer une utilisation du véhicule par l'un ou l'autre de deux chauffeurs lorsque ledit véhicule est à l'arrêt, de prévoir que les moyens d'entraînement desdits seconds moyens inscripteurs comportent en outre des organes d'entraînement supplémentaires en prise avec le moteur électrique, de façon à entraîner les seconds moyens inscripteurs associés à l'un ou l'autre des deux chauffeurs selon la position d'un sélecteur manuel supplémentaire prévu à cet effet.

Il est également intéressant que le dispositif d'inscription comporte un boîtier dans lequel sont logés les moyens d'entraînement des premiers et seconds moyens inscripteurs, et sur lequel est monté le moteur électrique, de façon à constituer un sous-ensemble fonctionnel interchangeable.

Avantageusement alors, le boîtier comporte deux platines complémentaires définissant des paliers pour les axes des parties tournantes des moyens d'entraînement ; en particulier, le boîtier comporte une platine supérieure sur laquelle est fixée le moteur électrique, et une platine inférieure de laquelle saillent l'axe de transmission du totalisateur de distance et l'extrémité de commande du sélecteur manuel.

De préférence aussi, les deux butées fixes précitées sont des excroissances prévues sur la face intérieure de la platine inférieure du boîtier.

De préférence enfin, dans le cas d'une application bi-chauffeurs, un axe de sortie faisant partie des organes d'entraînement supplémentaires et l'extrémité de commande du sélecteur manuel supplémentaire saillent également de la platine inférieure du boîtier.

D'autres caractéristiques et avantages de l'invention apparaîtront plus clairement à la lumière de la description qui va suivre et des dessins annexés, concernant un mode de réalisation particulier, en référence aux figures du dessin annexé, où :

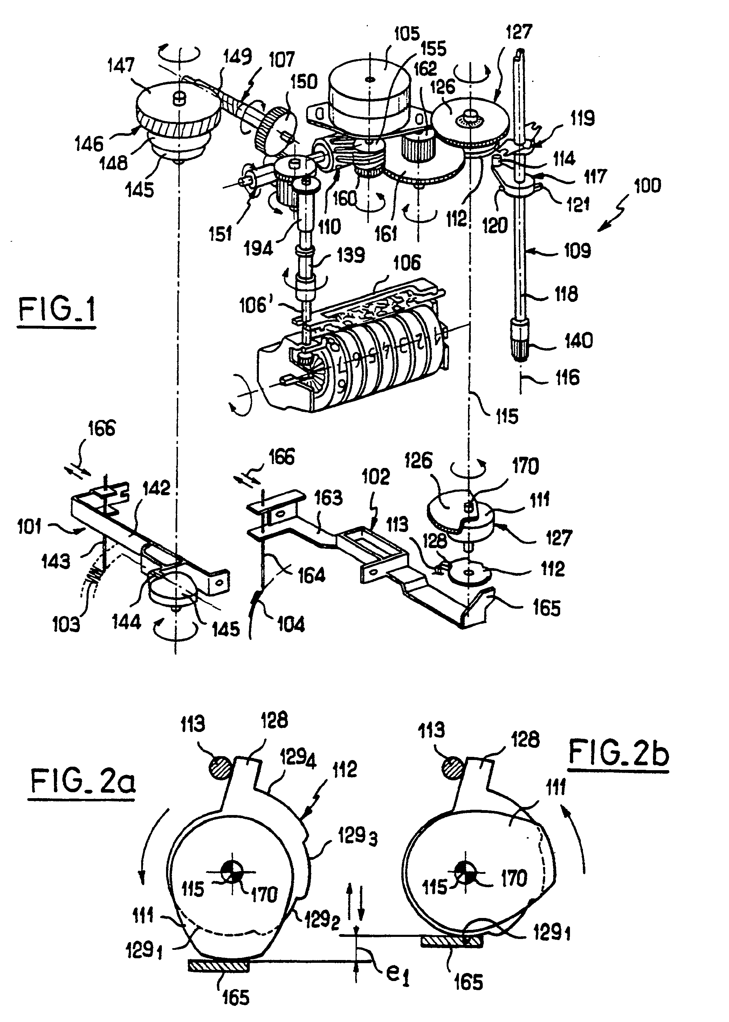

– la figure 1 est une vue en perspective illustrant un dispositif d'inscription conforme à l'invention, en bas de laquelle ont été représentés le chariot odomètre et le chariot des activités chauffeur, avec les deux cames associées à ce dernier chariot, le moteur électrique tournant ici dans un sens direct (véhicule en marche, donc position dite "de conduite automatique") ;

– les figures 2a et 2b sont deux vues de dessus partielles, à échelle agrandie, illustrant les deux cames d'actionnement du chariot des activités chauffeur, pour deux positions limites de la came supérieure qui tourne en permanence, (véhicule en marche, donc position de conduite automatique, produisant un tracé d'enregistrement d'amplitude maximale) ;

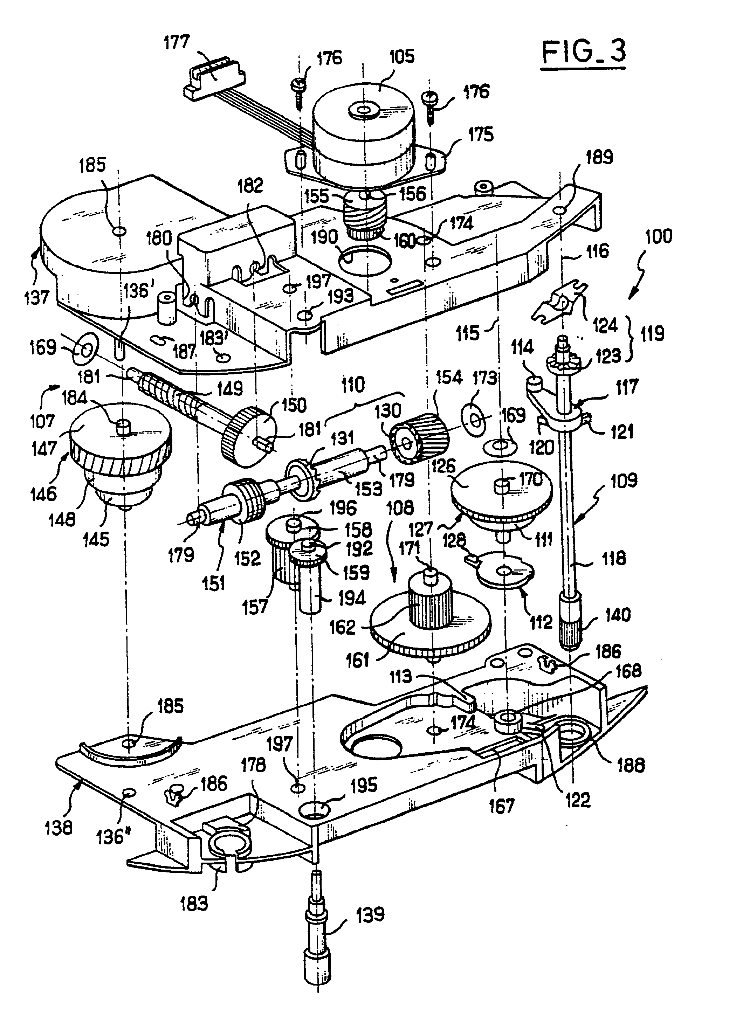

– la figure 3 est une vue éclatée illustrant les différents organes du dispositif de la figure 1, et permettant notamment de distinguer les deux platines complémentaires constituant un boîtier dans lequel sont logés les moyens d'entraînement et sur lequel est monté le moteur électrique ;

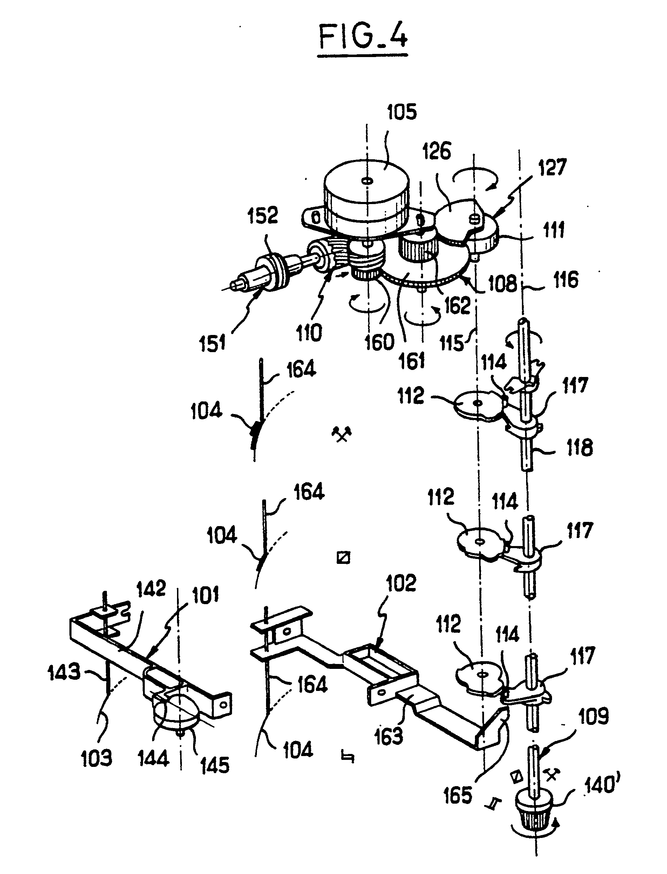

– la figure 4 est une vue en perspective analogue à celle de la figure 1, illustrant le même dispositif mais en train de fonctionner lorsque le véhicule est à l'arrêt, le moteur électrique tournant alors dans un sens inverse, (trois positions d'utilisation sont schématisées l'une en dessous de l'autre, avec pour chaque position la disposition des deux cames, et le tracé d'enregistrement correspondant) ;

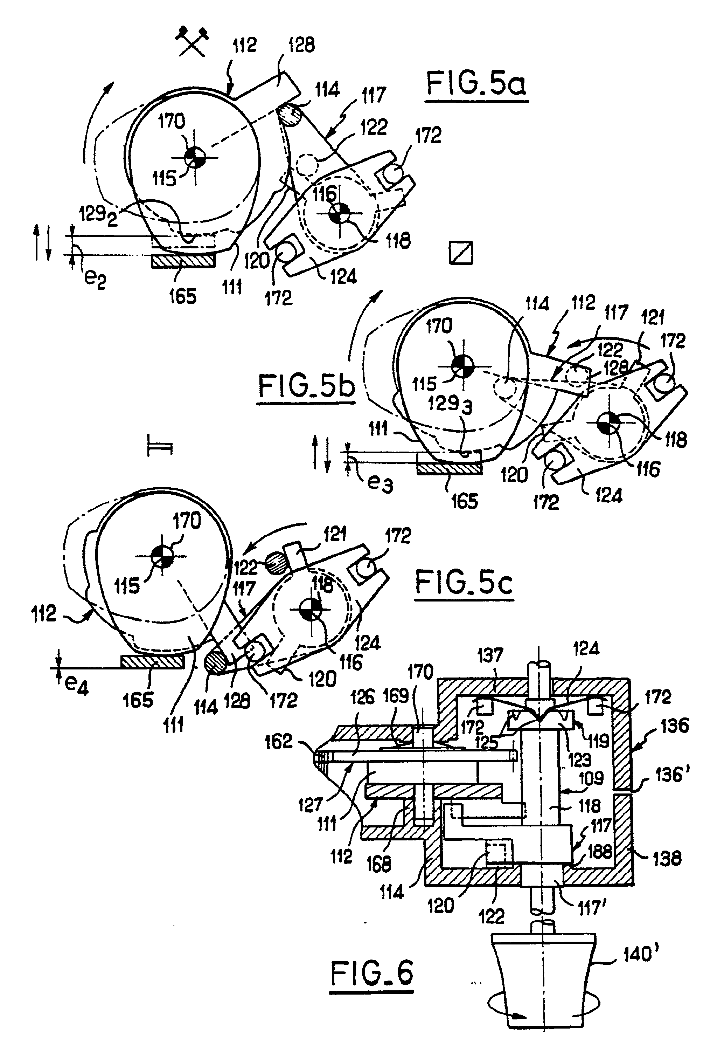

– les figures 5a, 5b et 5c sont des vues de dessus partielles analogues à celles des figures 2a et 2b, illustrant les deux cames d'actionnement et la butée mobile associée à la came inférieure, ainsi que le ressort de l'indexeur associé au sélecteur manuel, pour chacune des trois positions d'utilisation précitées (véhicule à l'arrêt, et positions respectivement de réparation, de chargement/déchargement, et de repos, produisant des tracés d'enregistrement d'amplitude de moins en moins grande selon la position) ;

– la figure 6 est une coupe illustrant une partie du dispositif avec son boîtier fermé, permettant de distinguer les deux cames, la butée mobile portée par le sélecteur manuel, et l'indexeur dudit sélecteur ;

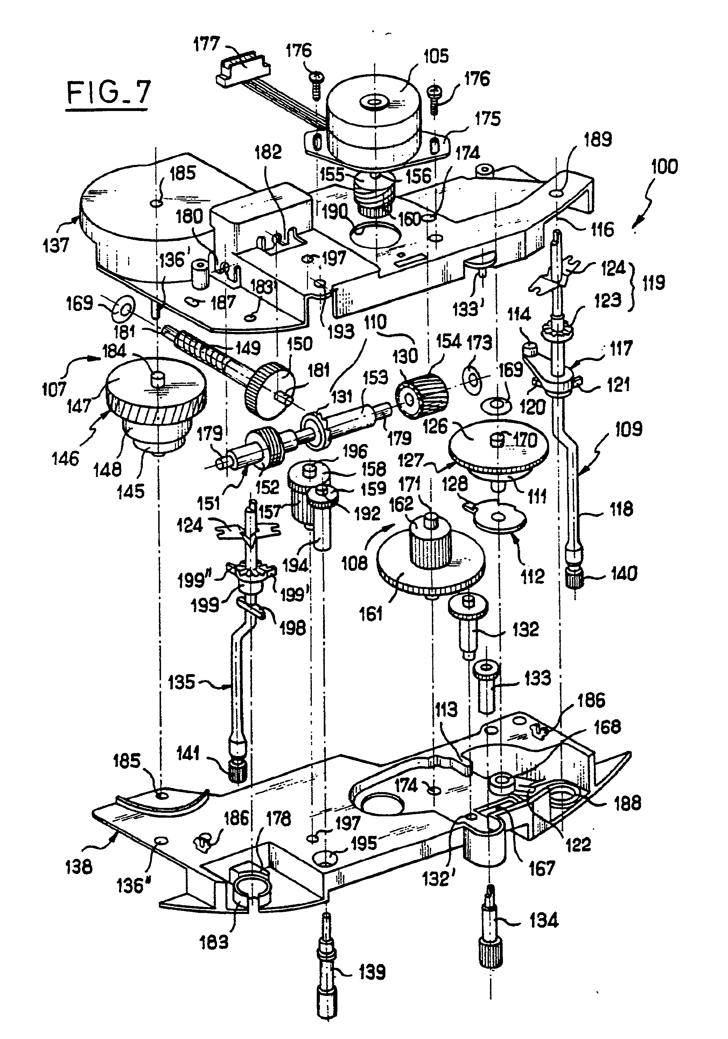

– la figure 7 est une vue éclatée analogue à celle de la figure 3, illustrant le même dispositif équipé de quelques organes supplémentaires en vue d'une application bi-chauffeurs.

Sur la figure 1, on distingue un dispositif d'inscription 100 conforme à l'invention, ce dispositif étant destiné à être intégré dans un enregistreur de route de véhicule, du type pouvant entrer en action automatiquement dès que le véhicule est en marche et aussi lorsque ledit véhicule est à l'arrêt. Conformément à la technique connue, ce dispositif comporte des premiers et des seconds moyens inscripteurs pour l'obtention de tracés d'enregistrement correspondants sur un disque porte-diagramme, lesdits premiers moyens inscripteurs, associés à la chaîne mécanique odométrique, étant actionnés par des moyens d'entraînement associés en prise avec le moteur électrique du totalisateur de distance, et lesdits seconds moyens inscripteurs, correspondant à différents modes d'utilisation du véhicule à l'arrêt, étant actionnés par des moyens d'entraînement associés tout en tenant compte de la position d'un sélecteur manuel correspondant au mode d'utilisation concerné.

On distingue ainsi des premiers moyens inscripteurs 101, essentiellement constitués par un chariot coulissant 142, appelé en général chariot odomètre, qui porte un stylet d'inscription 143 produisant un tracé d'enregistrement 103 sur un disque porte-diagramme. Ce chariot odomètre est monté dans le boîtier de l'enregistreur (non représenté ici), pour osciller selon des flèches 166, sous l'action d'une came 145 en forme de coeur contre laquelle le chariot odomètre 142 est en appui par l'intermédiaire d'une portion associée saillante 144. Conformément à la technique classique, ces premiers moyens inscripteurs 101 sont actionnés par des moyens d'entraînement associés 107 qui sont en prise avec le moteur électrique 105 du totalisateur de distance 106. Il est en général prévu des moyens d'entraînement tels que la came 145 fasse un tour (de creux à creux) pour 10 km, ce qui correspond à un aller et retour sur l'enregistrement.

Les seconds moyens inscripteurs 102 comportent un chariot 163, également monté dans le boîtier de l'enregistreur, et coulissant parallèlement au chariot odomètre 142 comme schématisé par les flèches 166. Ce chariot 163, appelé en général chariot des activités chauffeur, porte un stylet 164 produisant un tracé d'enregistrement 104 sur le disque porte-diagramme précité, ce tracé d'enregistrement 104 présentant cependant des épaisseurs variables correspondant aux différents modes d'utilisation du véhicule en marche ou à l'arrêt.

Conformément à un aspect essentiel de l'invention, le moteur électrique 105 de la chaîne odométrique est à deux sens de rotation, avec un sens direct associé à une période pendant laquelle le véhicule est en marche et dans lequel ledit moteur actionne simultanément les premiers et les seconds moyens inscripteurs 101 et 102, et un sens inverse associé à une période pendant laquelle le véhicule est à l'arrêt et dans lequel ledit moteur actionne seulement les seconds moyens inscripteurs 102.

Ainsi, selon cette caractéristique essentielle, le dispositif d'inscription 100 comporte un prélèvement de puissance sur le moteur d'entraînement de la chaîne odomètre pour l'actionnement du chariot des activités chauffeur lorsque le véhicule est à l'arrêt. Le fait de prévoir un moteur électrique à deux sens de rotation permet en l'espèce un double mode de fonctionnement, évitant non seulement la présence d'un moteur spécial supplémentaire, mais également une prise de puissance sur la montre ou sur le moteur de la chaîne vitesse. Ceci est particulièrement intéressant dans la mesure où le moteur de la chaîne odomètre est d'ordinaire déjà prévu relativement puissant, ce qui permet de disposer d'une réserve de puissance conférant une sécurité de fonctionnement très élevée, tout en réduisant notablement la consommation sur parc lorsque le véhicule est à l'arrêt. En effet, ceci permet d'utiliser un moteur de faible puissance pour l'entraînement de la montre, ce qui a bien évidemment pour effet de diminuer d'autant la consommation sur parc.

Il convient cependant d'organiser les moyens d'entraînement des seconds moyens inscripteurs 102 de telle façon que, lorsque le moteur électrique 105 tourne en sens inverse, c'est-à-dire lorsque le véhicule est à l'arrêt, il n'y ait aucun entraînement du totalisateur de distance 106 et aucun actionnement du chariot odomètre 142. A cet effet, et conformément à une autre caractéristique importante de l'invention, le totalisateur 106 est relié au moteur électrique 105 de la chaîne odométrique par une liaison d'accouplement débrayable 110 permettant d'entraîner ledit totalisateur et d'actionner lesdits premiers moyens enregistreurs seulement lorsque le moteur tourne dans le sens direct. Cette liaison d'accouplement débrayable 110 sera décrite plus en détail en regard des vues éclatées des figures 3 et 7, sur lesquelles la structure de cette liaison est mieux visible. Si l'on excepte la présence de la liaison d'accouplement débrayable 110 précitée, les moyens transmettant le mouvement depuis le moteur électrique 105 jusqu'au totalisateur 106 et au chariot odomètre 142 sont de conception classique. En se référant aux figures 1 et 3, on distingue ainsi une vis sans fin 155 montée sur l'arbre de sortie 156 du moteur 105, cette vis sans fin engrènant avec un pignon 154 qui entraîne (lorsque le moteur 105 tourne en sens direct) une autre vis sans fin coaxiale 152 faisant tourner le pignon 150 et une vis sans fin 149 coaxiale audit pignon et solidaire de celui-ci. La vis sans fin 149 fait tourner une pièce 146 constituée d'une portion supérieure 147 en forme de pignon d'engrènement, d'une portion intermédiaire entretoise 148, et d'une portion inférieure 145 qui n'est autre que la came en forme de coeur précitée. Par ailleurs, la même vis sans fin 152 entraîne simultanément un pignon 157, surmonté d'un autre pignon 158 coaxial qui engrène avec un pignon 159 se prolongeant par une portion inférieure lisse 194 prévue pour recevoir l'axe de transmission 139 qui est couplé à l'arbre d'entrée 106' du totalisateur de distance 106. La figure 3 permet de distinguer une pièce 151 portant la vis sans fin 152 précitée, et se prolongeant par une portion cylindrique 153 sur laquelle est monté à glissement le pignon 154 précité. La pièce 151 porte subsidiairement une couronne dentée 131 qui peut coopérer avec une couronne homologue 130 prévue en extrémité du pignon 154. Ces couronnes dentées 130, 131 constituent la liaison d'accouplement 110 précitée, dans la mesure où les dents de scie de ces couronnes réalisent un entraînement positif lorsque le moteur électrique 105 tourne dans le sens direct, mais glissent les unes sur les autres à la façon d'un cliquet lorsque ledit moteur tourne dans le sens inverse. Un paillon 173, en forme de rondelle Belleville, permet d'assurer un force d'application élastique sur les deux couronnes dentées 130, 131. Ainsi, lorsque le moteur électrique 105 tourne en sens inverse, la liaison 110 est débrayée, et évite toute transmission de mouvement par ledit moteur vers le totalisateur 106 ou vers le chariot odomètre 142. A titre indicatif, le pignon 154 présentera 16 dents, le pignon 157 présentera 25 dents, le pignon 158 présentera 35 dents et le pignon 159 présentera 20 dents.

Conformément à un mode de réalisation particulièrement avantageux illustré ici, les seconds moyens enregistreurs 102 sont actionnés par des moyens d'entraînement 108 comportant deux cames coaxiales 111, 112 superposées, dont une première came 111 qui est en permanence en prise avec le moteur électrique 105, et une deuxième came 112 qui est entraînée par friction par ladite première came, et ce jusqu'à une position de butée prédéterminée.

La première came 111 fait ici partie d'une pièce unique 127 dont l'autre portion est un pignon coaxial 126 permettant son entraînement en rotation par le moteur électrique 105.

Ainsi, les figures 1 et 3 permettent de distinguer, sur l'arbre de sortie 156, et au-delà de la vis sans fin 155, un pignon 160 engrènant avec un pignon 161 qui est surmonté d'un pignon de plus faible diamètre 162. Ce pignon 162 est en prise avec la portion en forme de pignon 126 de la pièce 127 présentant inférieurement la came 111 précitée. Ainsi, les moyens d'entraînement du chariot des activités chauffeur 163 comportent successivement le pignon 160, le pignon 161, le pignon 162, le pignon 126, et enfin la première came 111 qui produit le mouvement alternatif du chariot 163 par l'intermédiaire d'une patte 165 de celui-ci. La deuxième came 112, qui est entraînée par friction par la première came 111 jusqu'à une position de butée prédéterminée, permet de définir, par la portion concernée de son contour lors de la position de butée concernée, l'amplitude du tracé d'enregistrement 104.

Deux systèmes de butée sont ici prévus pour arrêter la deuxième came 112, selon le sens de rotation du moteur électrique 105.

Il est ainsi tout d'abord prévu une première butée fixe 113 pour arrêter la deuxième came 112 lorsque le moteur 105 tourne dans le sens direct. Ce mode de fonctionnement correspond précisément aux sens de rotation indiqués sur la figure 1, conformément aux explications données ci-après en référence aux figures 2a et 2b.

Les figures 2a et 2b permettent en effet de distinguer les deux cames superposées 111 et 112, et la patte 165 du chariot des activités chauffeur, pour deux positions limites de la came supérieure 111 qui, rappelons-le, tourne en permanence du fait de son entraînement direct par le moteur électrique 105. Ce mode de fonctionnement correspond au cas où le véhicule est en marche, et la position est une position de conduite automatique produisant un tracé d'enregistrement d'amplitude maximale. En effet, la came supérieure 111 tourne dans le sens anti-horaire, ce qui a amené la came inférieure 112 en appui, par l'intermédiaire d'une patte radiale saillante 128 de celle-ci, contre la butée fixe 113 précitée. La came inférieure 112 reste alors dans cette position, alors que la came supérieure 111 continue à tourner en permanence. Dans ce cas, la deuxième came 112 qui est une pièce plate à profil étagé est dans une position telle que son secteur $129_1$ de plus faible rayon est périodiquement contacté par la patte 165 du chariot des activités chauffeur, comme cela est illustré à la figure 2b. Ainsi, en position de conduite automatique, on trouvera une amplitude notée $e_1$ sur les figures 2a et 2b, qui est maximale pour l'oscillation du chariot 163 des activités chauffeur, de sorte que le tracé d'enregistrement 104 présente alors son épaisseur maximale.

Il est par ailleurs prévu une butée mobile 114 couplée au sélecteur manuel 109, pour arrêter la deuxième came 112 lorsque le moteur 105 tourne dans le sens inverse, l'axe 115 des deux cames 111, 112 étant naturellement parallèle à l'axe 116 dudit sélecteur manuel. Ainsi que cela est mieux visible sur la vue éclatée de la figure 3, la butée mobile 114 est ici portée par une pièce de butée 117 montée sur la tringle 118 du sélecteur manuel 109, ladite pièce de butée étant affectée d'un indexeur 119 marquant chacune des positions dudit sélecteur manuel pouvant être sélectionnées.

Ce mode de fonctionnement du dispositif de l'invention correspond à une situation dans laquelle le véhicule est à l'arrêt. Il convient alors de se reporter à la figure 4, et aux vues schématiques des figures 5a, 5b et 5c.

Le moteur électrique 105 tournant en sens inverse, la liaison d'accouplement 110 est débrayée, de sorte que le chariot odomètre 142 n'est pas actionné, ce qui correspond à un tracé d'enregistrement 103 réduit à une simple ligne, le totalisateur 106 (non représenté sur la figure 4) n'étant bien évidemment pas entraîné en sens inverse grâce au débrayage de ladite liaison. Le chariot véritablement actif dans ce mode de fonctionnement est le chariot 163 des activités chauffeur. On a représenté ici trois positions différentes du sélecteur manuel 109, correspondant à des situations de repos (⊨), de chargement/déchargement (⊡), et de réparation (✗). Ces trois positions du sélecteur manuel 109 sont marquées grâce à un indexeur 119, qui se présente ici sous la forme d'une roue crantée 123 montée sur la tringle 118 du sélecteur manuel 109, et par une lame ressort bloquée en rotation 124, qui coopère avec l'un des crans 125 de ladite roue crantée.

Par ailleurs, la pièce de butée 117 portant la butée mobile 114 présente deux taquets saillant radialement 120, 121, afin de limiter le débattement angulaire de ladite pièce de butée par coopération avec une seconde butée fixe 122.

La came supérieure 111 tourne maintenant dans le sens horaire, ce qui entraîne la deuxième came 112, par friction, jusqu'à ce que celle-ci soit en appui, par l'intermédiaire de sa patte radiale saillante 128, contre la butée mobile 114. On conçoit alors aisément que la position de la butée mobile 114 va permettre de disposer l'un quelconque des secteurs circulaires du profil étagé en regard de la patte 165 du chariot des activités chauffeur 163.

– Figure 5a : il s'agit ici d'une position du sélecteur manuel correspondant à un mode d'utilisation du type réparation. Dans cette position, le second secteur circulaire $129_2$, présentant un rayon légèrement supérieur au secteur précédent $129_1$ qui était concerné en position de conduite automatique, se trouve en regard de la patte 165, ce qui produit une amplitude d'oscillations $e_2$. Dans cette position, le taquet 120 du sélecteur manuel 109 est en appui contre la seconde butée fixe 122.

– Fibure 5b: le sélecteur manuel 109 est dans une position correspondant à un mode d'utilisation du type chargement/déchargement. Dans ce cas, la pièce de butée 117 a subi une rotation dans le sens anti-horaire par rapport à la position précédente, de sorte que la position d'appui de la came inférieure 112 contre la butée mobile 114 a permis d'amener le troisième secteur circulaire $129_3$ en regard de la patte 165 du chariot des activités chauffeur. Dans ce cas, on trouvera une amplitude d'oscillations $e_3$, plus faible que l'amplitude précédente, pour le tracé d'enregistrement 104.

– Figure 5c: le sélecteur manuel 109 est dans une position correspondant à un mode d'utilisation du type repos. La pièce de butée 117 a subi alors une nouvelle rotation par rapport à la position précédente, cette rotation étant en fait limitée par l'appui de l'autre taquet 121 du sélecteur manuel 109 contre la butée fixe associée 122. Une nouvelle position d'appui de la came inférieure 112 contre la butée mobile 114 a alors permis d'amener le quatrième secteur circulaire $129_4$, qui est le secteur circulaire de plus grand rayon du profil étagé de cette came, en regard de la patte 165 du chariot des activités chauffeur. On trouve alors une amplitude d'oscillations $e_4$, qui est naturellement la plus faible, cette amplitude pouvant même être nulle, de telle sorte que le tracé d'enregistrement 104 se réduit dans ce cas à une simple ligne.

La figure 4 permet de distinguer, les différentes positions du sélecteur manuel 109 lorsque le véhicule est à l'arrêt, ces trois positions d'utilisation étant schématisées l'une en dessous de l'autre, avec pour chaque position la disposition de la came inférieure 112 et de la butée mobile associée 114, avec le tracé d'enregistrement 104 correspondant.

Le moteur électrique 105 de la chaîne odométrique, prévu pour tourner dans deux sens d'orientation, sera de préférence un moteur pas-à-pas. Il est par ailleurs intéressant d'affecter une temporisation au moteur électrique 105, de façon à retarder pendant un laps de temps prédéterminé l'inversion dudit moteur en cas d'arrêt du véhicule sans coupure de son moteur. En prévoyant une temporisation électronique d'une durée d'environ une minute, cela permet d'éviter une inversion inopinée du sens de rotation lorsque le véhicule est en situation d'arrêt de courte durée (par exemple devant un feu de signalisation). Ainsi, si le véhicule s'arrête, son moteur n'étant pas coupé, le moteur électrique 105 continue encore à tourner dans le sens direct, en position de conduite automatique.

En outre, il est également intéressant de prévoir une temporisation supplémentaire associée à ce même moteur électrique 105 en cas d'arrêt du véhicule avec coupure de son moteur, afin de retarder l'arrêt dudit moteur électrique, et de garantir ainsi que la deuxième came 112 est effectivement au contact de la butée mobile associée 114. Cette temporisation supplémentaire sera de préférence courte, par exemple de l'ordre de quelques minutes, pour une position du sélecteur manuel 109 correspondant à une période de repos, mais nettement plus longue, par exemple de l'ordre de 24 à 48 heures pour les autres positions dudit sélecteur manuel correspondant à une période de chargement/déchargement ou à une période de réparation.

Conformément à un aspect intéressant de la présente invention, le dispositif d'inscription comporte ici un boîtier 136 dans lequel sont logés les moyens d'entraînement 107, 108 des premiers 101 et des seconds 102 moyens inscripteurs, et sur lequel est monté le moteur électrique 105, de façon à constituer un sous-ensemble fonctionnel interchangeable. Ainsi que cela est visible sur la vue éclatée de figure 3, le boîtier 136 comporte en l'espèce deux platines complémentaires 137, 138 définissant des paliers pour les axes des parties tournantes des moyens d'entraînement 107, 108. Le moteur électrique 105 est ainsi fixé sur la platine supérieure 137 par sa plaquette 175, à l'aide de vis 176. Une ouverture 190 est prévue dans la platine supérieure 137, pour le passage de la vis sans fin 155 et du pignon 160. Une fois que le moteur électrique 105 est monté sur la platine supérieure, seul dépasse de celle-ci le boîtier dudit moteur, avec son connecteur de raccordement 177. Pour ce qui est de la platine inférieure 138, les seules parties qui saillent inférieurement de cette platine sont l'axe de transmission 139 du totalisateur de distance 106 et l'extrémité de commande notée 140 du sélecteur manuel 109, extrémité sur laquelle est monté un bouton de commande 140′ visible sur les figures 4 et 6. La vue éclatée de la figure 3 permet en outre de distinguer, sur la platine inférieure 138, la première butée fixe 113 qui intervient en position de conduite automatique pour arrêter la deuxième came 112 (voir les figures 2a et 2b), et la deuxième butée fixe 122 associée à la pièce de butée 117 portant la butée mobile 114 : en l'espèce, ces deux butées fixes 113 et 122 sont des excroissances prévues sur la face intérieure de la platine inférieure 138.

Ainsi que cela a été dit plus haut, l'intégration des moyens d'entraînement 107 et 108 dans le boîtier 136 est obtenue en définissant tous les paliers associés aux axes des parties tournantes de ces moyens d'entraînement, ce qui permet de réaliser les parties tournantes en une seule pièce en matière plastique avec leur axe de rotation, sans que ce soit au détriment de la précision ; ceci constitue un avantage notable au regard des techniques connues, dans lesquelles les moyens d'entraînement classiques comportaient un axe métallique rapporté, tourillonnant sur une portion associée du boîtier de l'enregistreur. On distingue ainsi sur la figure 3 l'axe 170 de la pièce 127 portant la première came 111, ledit axe tourillonnant sur les deux platines du boîtier 136, en particulier dans le fût d'appui 168 de la platine inférieure 138. Un paillon élastique 169 assure la force d'application nécessaire qui permet d'entraîner la deuxième came 112 par friction du fait de la rotation permanente de la première came 111. On distingue également l'axe commun 171 des pignons 161 et 162 (constituant une pièce unique), ledit axe tourillonnant dans des perçages 174 associés de chaque platine du boîtier. Il en va de même pour la pièce comportant les pignons 157 et 158, dont l'axe 196 tourillonne dans des perçages 197 des platines. L'axe 192 du pignon 159 tourillonne quant à lui dans un perçage 193 de la platine supérieure 137, tandis que la portion inférieure de cette même pièce 194 tourillonne dans un perçage 195 plus large de la platine inférieure 138, ce perçage 195 constituant ainsi un palier précis pour l'entraînement en rotation de l'axe de transmission 139 du totalisateur de distance. Il en va également de même pour la pièce 146 portant la came odomètre en forme de coeur 145, dont l'axe 184 tourillonne dans des perçages associés 185 de chacune des platines.

Le parallélisme de tous ces différents axes est assuré par un alignement parfait de chacune des platines constituant le boîtier 136, cet alignement étant repéré par des moyens de registration tels que le picot 136′ de la platine supérieure 137, qui est reçu dans un perçage associé 136″ de la platine inférieure 138. La liaison des deux platines est par exemple assurée par des moyens d'encliquetage, tels que les fourches 186 de la platine inférieure 138 reçues dans des fentes associées 187 de la platine supérieure 137.

Par ailleurs, la platine supérieure 137 assure le support des deux pièces 151, et 150-149 d'axe horizontal. La pièce 151 présente des extrémités d'axe 179 qui sont reçues dans des pattes d'encliquetage associées 180 de la platine supérieure 137 (on ne distingue sur la figure 3 qu'une seule de ces deux pattes). De la même façon, les extrémités d'axe 181 de la pièce constituant le pignon 150 et la vis sans fin 149 sont reçues dans des pattes d'encliquetage telles que la patte 182 de la platine supérieure 137. Un positionnement correct est assuré par des paillons élastiques : le paillon 173 associé à la pièce 151 a déjà été décrit, et son importance est grande dans la mesure où il est associé à la liaison d'accouplement débrayable 110. Pour la pièce formant le pignon 150 et la vis sans fin 149, on distingue un paillon identique 169.

Les deux platines du boîtier 136 assurent également le tourillonnement de la butée mobile 114 et de la tringle 118 du sélecteur manuel 109 qui la supporte. L'extrémité supérieure de la tringle 118 du sélecteur manuel 109 passe par un perçage 189 de la platine supérieure 137, tandis que la platine inférieure 138 présente un palier 188 recevant une portion cylindrique 117′ (visible sur la figure 6) de la tringle 118 du sélecteur manuel 109. Des moyens analogues peuvent être prévus sur les deux platines pour le support d'un sélecteur manuel supplémentaire en vue d'une application bi-chauffeur, ainsi que cela sera décrit plus loin en regard de la figure 7.

La coupe de la figure 6 permet de mieux distinguer les deux cames 111, 112, et la butée mobile portée par le sélecteur manuel 109, lorsque les deux platines 137 et 138 sont assemblées l'une contre l'autre pour constituer le boîtier 136. La fente 136′ schématise la ligne de contact de ces deux platines. On distingue en particulier le montage des deux cames l'une contre l'autre, avec le tourillonnement de l'axe 170 qui les supporte, et le ressort de pression constitué par le paillon 169. Cette figure permet également de distinguer le montage de la lame ressort 124 de l'indexeur 119 : la platine supérieure 137 porte ainsi deux pions fixes saillants 172 qui assurent le blocage en rotation de cette lame ressort 124, dont les extrémités présentent des encoches associées, ainsi que cela est visible sur les figures 5a, 5b, et 5c décrites plus haut. On distingue également sur la figure 6 la partie centrale de la lame ressort 124, qui est cintrée pour pouvoir pénétrer dans l'un des crans 125 de la roue crantée 123.

Ainsi qu'on peut l'observer sur la figure 3, la platine inférieure 138 présente en outre une lumière 167 permettant le passage de la patte 165 du chariot 163 des activités chauffeur. Le chariot 163, qui oscille sous la platine inférieure 138, est ainsi au contact des cames 111 et 112 par l'intermédiaire de sa patte 165 qui pénètre à l'intérieur du boîtier 136.

En position de conduite automatique, l'amplitude d'oscillations est maximale : cette amplitude $e_1$ représentée sur les figures 2a et 2b pourra être de l'ordre de 2,4 mm. Lorsque le véhicule est à l'arrêt, l'amplitude d'oscillations du chariot des activité chauffeur dépend de la position du sélecteur manuel 109 : en position de réparation (figure 5a) on trouve une amplitude d'oscillations $e_2$ qui est par exemple de l'ordre de 1,6 mm, en position de chargement/déchargement (figure 5b) on trouve une amplitude d'oscillations $e_3$ qui est par exemple de l'ordre de 0,8 mm, et enfin en position de repos (figure 5c) on trouve une amplitude d'oscillations $e_4$ qui est par exemple égale à zéro.

Ainsi que cela a été précisé plus haut, il est avantageux de prévoir que le dispositif d'inscription selon l'invention peut être utilisé dans le cadre d'une application bi-chauffeur. Dans ce cas, les seconds moyens inscripteurs 102 sont dédoublés de façon connue en soi pour un enregistrement sur deux disques porte-diagramme superposés de manière isoaxiale, de façon à pouvoir distinguer une utilisation du véhicule par l'un ou l'autre de deux chauffeurs lorsque ledit véhicule est à l'arrêt.

Il convient dans ce cas de se reporter à la demande de brevet européen N° 0 328 354 de la demanderesse, dans laquelle est décrit en détail un enregistreur de ce type à deux disques porte-diagramme.

Dans ce cas, et selon une caractéristique de l'invention, les moyens d'entraînement 108 des seconds moyens inscripteurs comportent en outre des organes d'entraînement supplémentaires 132, 133, 134, en prise avec le moteur électrique 105, de façon à entraîner les seconds moyens inscripteurs associés à l'un ou l'autre des deux chauffeurs selon la position d'un sélecteur manuel supplémentaire 135 prévu à cet effet. L'organe 132 présente un pignon qui est en prise avec le pignon 126 de la pièce 127 portant la première came 111, cet organe 132 tourillonnant par des perçages tels que 132' ménagés à cet effet dans les platines constituant le boîtier. L'organe 133 présente un pignon engrènant avec le pignon de l'organe 132, et tourillonne sur la platine inférieure 138 par une portion cylindrique enchâssée sur un axe 134, dont le pignon saille inférieurement en dessous de la platine inférieure 138 de façon à pouvoir remplir sa fonction d'entraînement. On distingue sur la figure 7 différents organes d'entraînement supplémentaires, et plusieurs moyens de tourillonnement ; on notera toutefois que l'organe 133 est ici maintenu par un téton 133' porté par la platine supérieure 137.

L'axe d'entraînement 134 permet d'entraîner une roue dentée d'entraînement faisant partie d'un mécanisme qui est intégré dans la porte de l'enregistreur : si l'on se reporte à la demande de brevet européen précitée de la demanderesse, cette roue dentée d'entraînement est repérée 53 dans la description de ladite demande.

La figure 7 permet également de distinguer le sélecteur manuel supplémentaire 135 présentant une extrémité inférieure de la commande 141 destinée à recevoir un bouton de sélection (non représenté ici).

Ce sélecteur manuel supplémentaire 135 porte également un taquet 198, surmonté d'une roue d'indexage 199 coopérant avec un ressort d'indexage 124 : l'indexeur constitué par la roue crantée 199 et la lame ressort 124 est identique à l'indexeur 119 précité du sélecteur manuel 109, et permet ainsi de marquer chacune des trois positions de ce sélecteur manuel supplémentaire 135. La roue crantée 199 porte également deux taquets saillants radialement 199', 199" limitant le débattement angulaire du sélecteur manuel supplémentaire 135 par coopération avec une autre butée fixe associée 178 prévue à cet effet sur la platine inférieure 138. Dans la réalité, le sélecteur manuel supplémentaire 135 se prolonge, au-dessus de la roue d'indexage 199, par une tige passant par le perçage 183' associé de la platine supérieure 137, tout comme le sélecteur manuel 109 dont la tige supérieure se prolonge pour passer à travers le perçage associé 189 : les extrémités supérieures des sélecteurs manuels 109 et 135 servent pour procurer un contact électrique permettant de repérer la position angulaire des sélecteur manuels associés dans chacune des trois positions de celui-ci lorsque le véhicule est à l'arrêt. La roue d'indexage 199 tourillonne sur la platine inférieure 138 par un palier 183. De ce fait, le taquet 198 est, lorsque le dispositif est monté dans le boîtier fermé 136, en dessous de la platine inférieure 138 : ce taquet 198 permet d'agir sur un levier portant une came tournante dont une portion coopère avec l'extrémité d'un coulisseau d'activités deuxième chauffeur (ces moyens sont décrits dans la demande de brevet européen précitée de la demanderesse, dans laquelle un taquet identique référencé 56 est décrit en détail). Ainsi, dans le cadre d'une application bi-chauffeur, l'axe de sortie 134 faisant partie des organes d'entraînement supplémentaires et l'extrémité de commande 141 du sélecteur manuel supplémentaire 135 saillent également de la platine inférieure 138 du boîtier 136.

Il convient d'observer que la platine inférieure 138 comportant les moyens de tourillonnement et de butée associés aux organes supplémentaires d'entraînement 132, 133, 134 et au sélecteur manuel supplémentaire 135 peut être indifféremment utilisée dans la version un chauffeur ou deux chauffeurs. C'est ainsi que, sur la vue éclatée de la figure 3, on peut constater la présence de ces moyens, bien que ceux-ci n'interviennent pas dans la version un chauffeur. Ceci constitue naturellement un avantage important, dans la mesure où il est aisé d'équiper l'ensemble fonctionnel illustré en figure 3 en vue d'une application bi-chauffeurs: après avoir ouvert le boîtier 136, il suffit alors de mettre en place des organes supplémentaires d'entraînement 132, 133, 134, et le sélecteur manuel supplémentaire 135.

Il convient d'observer que la position de conduite automatique n'intervient en réalité qu'en version un chauffeur : en effet, il est dans la pratique suffisant de s'intéresser aux activités chauffeur lorsque le véhicule est à l'arrêt pour l'un ou l'autre des deux chauffeurs, de sorte que le dispositif de l'invention n'organise l'entraînement du ou des chariots d'activités que lorsque le véhicule est à l'arrêt, dans l'une quelconque des trois positions du sélecteur manuel associé au chauffeur concerné.

L'invention n'est pas limitée aux modes de réalisation qui viennent d'être décrits, mais englobe au contraire toute variante reprenant, avec des moyens équivalents, les caractéristiques essentielles figurant aux revendications.

## Revendications

1. Dispositif d'inscription pour enregistreurs de route de véhicule, pouvant entrer en action automatiquement dès que le véhicule est en marche et aussi lorsque ledit véhicule est à l'arrêt, comportant des premiers et des seconds moyens inscripteurs pour l'obtention de tracés d'enregistrement correspondants sur un disque porte-diagramme, lesdits premiers moyens inscripteurs, associés à la chaîne mécanique odométrique, étant actionnés par des moyens d'entraînement associés en prise avec le moteur électrique du totalisateur de distance, et lesdits seconds moyens inscripteurs, correspondant à différents modes d'utilisation du véhicule à l'arrêt, étant actionnés par des moyens d'entraînement associés tout en tenant compte de la position d'un sélecteur manuel correspondant au mode d'utilisation concerné, caractérisé par le fait que le moteur (105) de la chaîne odométrique est à deux sens de rotation, avec un sens direct associé à une période pendant laquelle le véhicule est en marche et dans lequel ledit moteur actionne simultanément les premiers (101) et seconds (102) moyens inscripteurs, et un sens inverse associé à une période pendant laquelle le véhicule est à l'arrêt, dans lequel ledit moteur entraîne seulement les seconds moyens inscripteurs (102), le totalisateur (106) étant relié au moteur (105) de la chaîne odométrique par une liaison d'accouplement débrayable (110) permettant d'entraîner ledit totalisateur et d'actionner lesdits premiers moyens enregistreurs seulement lorsque ledit moteur tourne dans le sens direct.

2. Dispositif d'inscription selon la revendication 1, caractérisé par le fait que les moyens d'entraînement (108) des seconds moyens enregistreurs (102) comportent deux cames coaxiales (111, 112) superposées, dont une première came (111) qui est en permanence en prise avec le moteur (105), et une deuxième came (112) qui est entraînée par friction par ladite première came, jusqu'à une position de butée prédéterminée, de façon à définir, par la portion concernée de son contour lors de la position de butée concernée, l'amplitude du tracé d'enregistrement (104).

3. Dispositif d'inscription selon la revendication 2, caractérisé par le fait qu'il comporte une butée fixe (113) pour arrêter la deuxième came (112) lorsque le moteur (105) tourne dans le sens direct, et une butée mobile (114) couplée au sélecteur manuel (109), pour arrêter ladite deuxième came lorsque le moteur (105) tourne dans le sens inverse, l'axe (115) des deux cames (111, 112) étant parallèle à l'axe (116) dudit sélecteur manuel.

4. Dispositif d'inscription selon la revendication 3, caractérisé par le fait que la butée (114) est portée par une pièce de butée (117) montée sur la tringle (118) du sélecteur manuel (109), ladite pièce de butée étant affectée d'un indexeur (119) marquant chacune des positions dudit sélecteur manuel pouvant être sélectionnées.

5. Dispositif d'inscription selon la revendication 4, caractérisé par le fait que la pièce de butée (117) présente en outre deux taquets saillant radialement (120, 121) limitant son débattement angulaire par coopération avec une seconde butée fixe (122).

6. Dispositif d'inscription selon la revendication 4 ou 5, caractérisé par le fait que l'indexeur (119) est essentiellement constitué par une roue crantée (123) montée sur la tringle (118) du sélecteur manuel (109), et par une lame-ressort bloquée en rotation (124) coopérant avec l'un des crans (125) de ladite roue crantée.

7. Dispositif d'inscription selon l'une des revendications 2 à 6, caractérisé par le fait que la première came (111) fait partie d'une pièce unique (127), dont une portion est un pignon coaxial (126) permettant son entraînement en rotation par le moteur (105).

8. Dispositif d'inscription selon l'une des revendications 3 à 7, caractérisé par le fait que la deuxième came (112) est une pièce plate à profil étagé, présentant une patte radiale saillante (128) pouvant coopérer soit avec la butée fixe (113) soit avec la butée mobile (114), selon le sens de rotation du moteur (105).

9. Dispositif d'inscription selon la revendication 8, caractérisé par le fait que le profil étagé de la deuxième came comporte successivement quatre secteurs circulaires ($129_1$, $129_2$, $129_3$, $129_4$)

de rayons croissant progressivement, le secteur $(129_1)$ de plus faible rayon intervenant lorsque le moteur (105) de la chaîne odométrique tourne dans le sens direct, pour un tracé d'enregistrement (104) d'amplitude maximale, et les autres secteurs $(129_2, 129_3, 129_4)$ intervenant lorsque ledit moteur tourne dans le sens inverse pour des tracés (104) d'amplitudes plus faibles correspondantes.

10. Dispositif d'inscription selon l'une des revendications 1 à 9, caractérisé par le fait que la liaison d'accouplement débrayable (110) associée à l'entraînement du totalisateur (106) et à l'actionnement des premiers moyens enregistreurs (101) est réalisée sous la forme d'une liaison dentée à cliquet (130, 131), réalisant un entraînement positif dans un sens et un glissement dans l'autre sens.

11. Dispositif d'inscription selon l'une des revendications 1 à 10, caractérisé par le fait que le moteur électrique (105) de la chaîne odométrique est un moteur pas-à-pas.

12. Dispositif d'inscription selon la revendication 11, caractérisé par le fait qu'une temporisation est associée au moteur électrique (105), de façon à retarder pendant un laps de temps prédéterminé l'inversion dudit moteur en cas d'arrêt du véhicule sans coupure de son moteur.

13. Dispositif d'inscription selon les revendications 3 et 11, caractérisé par le fait qu'une temporisation supplémentaire est associée au moteur électrique (105) en cas d'arrêt du véhicule avec coupure de son moteur, afin de retarder l'arrêt dudit moteur électrique, et de garantir ainsi que la deuxième came (112) est effectivement au contact de la butée mobile associée (114).

14. Dispositif d'inscription selon la revendication 13, caractérisé par le fait que la temporisation supplémentaire est courte, par exemple de l'ordre de quelques minutes, pour une position du sélecteur manuel (109) correspondant à une période de repos, et nettement plus longue, par exemple de l'ordre de 24 à 48 heures, pour les autres positions dudit sélecteur manuel correspondant à une période de chargement/déchargement ou à une période de réparation.

15. Dispositif d'inscription selon l'une des revendications 1 à 14, dans lequel les seconds moyens inscripteurs (102) sont dédoublés de façon connue en soi pour un enregistrement sur deux disques porte-diagramme superposés de manière isoaxique, de façon à pouvoir distinguer une utilisation du véhicule par l'un ou l'autre de deux chauffeurs lorsque ledit véhicule est à l'arrêt, caractérisé par le fait que les moyens d'entraînement (108) desdits seconds moyens inscripteurs comportent en outre des organes d'entraînement supplémentaires (132, 133, 134) en prise avec le moteur électrique (105), de façon à entraîner les seconds moyens inscripteurs associés à l'un ou l'autre des deux chauffeurs selon la position d'un sélecteur manuel supplémentaire (135) prévu à cet effet.

16. Dispositif d'inscription selon l'une des revendications 1 à 15, caractérisé par le fait qu'il comporte un boîtier (136) dans lequel sont logés les moyens d'entraînement (107, 108) des premiers (101) et seconds (102) moyens inscripteurs, et sur lequel est monté le moteur électrique (105), de façon à constituer un sous-ensemble fonctionnel interchangeable.

17. Dispositif d'inscription selon la revendication 16, caractérisé par le fait que le boîtier (136) comporte deux platines complémentaires (137, 138) définissant des paliers pour les axes des parties tournantes des moyens d'entraînement (107, 108).

18. Dispositif d'inscription selon la revendication 17, caractérisé par le fait que le boîtier (136) comporte une platine supérieure (137) sur laquelle est fixée le moteur électrique (105), et une platine inférieure (138) de laquelle saillent l'axe de transmission (139) du totalisateur de distance (106) et l'extrémité de commande (140) du sélecteur manuel (109).

19. Dispositif d'inscription selon les revendications 3, 5 et 18, caractérisé par le fait que les butées fixes (113, 122) sont des excroissances prévues sur la face intérieure de la platine inférieure (138) du boîtier (136).

20. Dispositif d'inscription selon les revendications 15 et 18, caractérisé par le fait qu'un axe de sortie (134) faisant partie des organes d'entraînement supplémentaires (132, 133, 134) et l'extrémité de commande (141) du sélecteur manuel supplémentaire (135) saillent également de la platine inférieure (138) du boîtier (136).

FIG.1

FIG.2a

FIG.2b

# FIG. 3

# FIG.4

FIG.5a

FIG.5b

FIG.5c

FIG.6

FIG_7

EP 0 445 031 A1

Office européen
des brevets

**RAPPORT DE RECHERCHE EUROPEENNE**

Numero de la demande

EP 91 40 0534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0186557 (JAEGER)<br>* abrégé; revendications 1-12; figures * | 1, 10, 11, 16 | G07C5/12<br>G01P1/12 |
| A,D | EP-A-0126374 (KIENZLE)<br>* page 7, ligne 11 - page 11, ligne 27; revendications 1-5; figures * | 1-12, 15, 16 | |
| A | EP-A-0102595 (KIENZLE)<br>* abrégé; revendications 1-3; figures * | 1, 10-13 | |
| A | US-A-3383696 (FICHTER)<br>* colonne 1, ligne 17 - colonne 3, ligne 7; figures * | 1 | |
| A,D | EP-A-0012223 (KIENZLE) | | |
| A | DE-A-3408064 (KIENZLE) | | |
| A,D | EP-A-0328454 (JAEGER) | | |

**DOMAINES TECHNIQUES RECHERCHES (Int. Cl.5)**

G07C
G01P
G01D

Le présent rapport a été établi pour toutes les revendications

| Lieu de la recherche | Date d'achèvement de la recherche | Examinateur |
|---|---|---|
| LA HAYE | 04 JUIN 1991 | MEYL D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

17